# EUROPÄISCHE PATENTSCHRIFT

(11) **EP 3 027 383 B1**
(45) Veröffentlichungstag und Bekanntmachung des Hinweises auf die Patenterteilung: **20.02.2019**
(21) Anmeldenummer: 13747368.2
(22) Anmeldetag: 01.08.2013
(51) Int. Cl.: B29C 48/25, B29C 48/68

(54) **VERFAHREN ZUR HERSTELLUNG EINES MIT EINER VERSCHLEISSSCHUTZSCHICHT VERSEHENEN DOPPELSCHNECKENZYLINDERS**
METHOD FOR PRODUCING A TWIN SCREW CYLINDER PROVIDED WITH A WEAR-PROTECTIVE LAYER
PROCÉDÉ SERVANT À FABRIQUER UN CYLINDRE À DOUBLE VIS POURVU D'UNE COUCHE DE PROTECTION CONTRE L'USURE

(43) Veröffentlichungstag der Anmeldung: 08.06.2016
(73) Patentinhaber: Reifenhäuser GmbH & Co. KG Maschinenfabrik, 53844 Troisdorf (DE)
(72) Erfinder: BENDIG, Peter, 51143 Köln (DE); PORSTNER, Thomas, 91207 Lauf (DE)
(74) Vertreter: Wagner Albiger & Partner Patentanwälte mbB
(86) Internationale Anmeldenummer: PCT/EP2013/066179
(87) Internationale Veröffentlichungsnummer: WO 2015/014402

(56) Entgegenhaltungen:
- EP-A1- 2 017 062
- AT-U1- 4 439
- GB-A- 1 560 352
- US-A- 3 970 113
- US-A- 4 519 713
- US-B1- 6 195 866

## Beschreibung

Die Erfindung betrifft ein Verfahren zur Herstellung eines mit einer Verschleißschutzschicht versehenen Doppelschneckenzylinders, bei welchem zwei im Wesentlichen parallel zueinander verlaufende und einander durchdringende Bohrungen in einen Zylinder eingebracht werden und anschließend in die Bohrungen zwei mit im Wesentlichen C-förmig ausgebildetem Querschnitt versehene und im Durchdringungsbereich der Bohrungen einander fortsetzende Auskleidungen eingebracht werden, die die Innenoberfläche der Bohrungen bilden und als Verschleißschutzschicht dienen.

Doppelschneckenzylinder werden in der Kunststoffverarbeitung bei Doppelschneckenextrudern eingesetzt und nehmen die Extruderschnecken auf. Verfahren zur Herstellung von derartigen Doppelschneckenzylindern sind vielfältig bekannt, wozu beispielsweise auf die US 3277529, US 3268949, US 3010151, US3970113 A, EP2017062 A1, GB1560352 A, US6195866 B1, AT4439 U1 sowie die DE 2231046 A1 verwiesen wird.

Bei den bekannten Doppelschneckenzylindern wird die Verschleißschutzschicht derart gebildet, dass zunächst die Bohrungen in den Zylinder eingebracht werden, welche später die Schnecken eines Doppelschneckenextruders aufnehmen sollen und in einem separaten Arbeitsgang die im Wesentlichen C-förmig ausgebildeten Auskleidungen mit ihren offenen Sektionen, die dem späteren Durchdringungsbereich der Bohrungen zugewandt sind, zueinander ausgerichtet werden und in diesem Bereich mittels Schweißnähten oder dergleichen miteinander verbunden werden. Die solchermaßen an die einander durchdringenden Bohrungen angepasste einstückige Auskleidung wird sodann in die Bohrungen im Zylinder unter mehr oder weniger starkem Druck eingebracht, so dass die Auskleidungen die Innenoberfläche der Bohrungen bilden und als Verschleißschutzschicht dienen.

Diese vorangehend erläuterte Technik ist seit vielen Jahren bewährt, ist jedoch handwerklich sehr aufwändig und bringt im Falle eines sich im Gebrauch einstellenden Verschleißes der Verschleißschutzschicht, der üblicherweise nur bereichsweise auftritt, die Notwendigkeit mit sich, den gesamten Zylinder, zumindest aber die gesamte die Verschleißschutzschicht bildende Auskleidung auszutauschen.

Aufgabe der Erfindung ist es, ausgehend vom genannten Stand der Technik ein Verfahren zur Herstellung eines mit der Verschleißschutzschicht versehenen Doppel-schneckenzylinders vorzuschlagen, welches mit verringertem Aufwand durchgeführt werden kann und die Möglichkeit eröffnet, verschleißbehaftete Abschnitte des Doppel-schneckenzylinders gezielt auszutauschen.

Zur Lösung der gestellten Aufgabe wird erfindungsgemäß ein Verfahren gemäß den Merkmalen des Patentanspruchs 1 vorgeschlagen.

Vorteilhafte Ausgestaltungen und Weiterbildungen des erfindungsgemäßen Verfahrens sind Gegenstand der auf den Patentanspruch 1 rückbezogenen Ansprüche.

Ein gemäß der Erfindung hergestellter Doppelschneckenzylinder für einen entsprechenden Doppelschneckenextruder ist Gegenstand des Patentanspruchs 10, wobei vorteilhafte Weiterbildungen und Ausgestaltungen den hiervon abhängigen Ansprüchen entnommen werden können.

Zur Lösung der erfindungsgemäß gestellten Aufgabe schlägt die Erfindung vor, wie auch schon im Stand der Technik zunächst die beiden im Wesentlichen parallel zueinander verlaufenden und einander durchdringenden Bohrungen in einen Zylinder einzubringen.

Unter "im Wesentlichen parallel zueinander verlaufenden und einander durchdringenden Bohrungen" werden im Sinne der Erfindung sowohl solche Bohrungen verstanden, die exakt parallel zueinander verlaufen, als auch solche, die unter einem spitzen Winkel zueinander verlaufen, wie es beispielsweise beim Einsatz von konischen Schnecken für einen entsprechenden Doppelschneckenextruder der Fall ist.

Erfindungsgemäß wird im Anschluss an das Einbringen der einander durchdringenden Bohrungen in den Zylinder zunächst eine erste rohrförmige Auskleidung, d.h. eine Auskleidung in Form eines vorzugsweise geschlossenen Rohres in eine erste der Bohrungen eingebracht und dann unter Ausbildung des C-förmigen Querschnittes derselben entsprechend dem Durchmesser der anderen, noch nicht mit einer Auskleidung versehenen Bohrung aufgetrennt. Auf diese Weise wird zunächst die erste Bohrung mit der die Verschleißschutzschicht bildenden Auskleidung versehen, welche insbesondere zunächst geschlossen ist und im späteren Durchdringungsbereich der Bohrungen nach Maßgabe des Durchmessers der anderen Bohrung aufgeschnitten bzw. aufgetrennt wird. Das sich hierbei ergebende abgetrennte Teilstück der Auskleidung wird verworfen bzw. einer Wiederverwendung zugeführt.

Nachdem solchermaßen die erste Bohrung mit der Auskleidung mit C-förmigem Querschnitt versehen worden ist, die aufgrund der Auftrennung nach Maßgabe des Durchmessers der zweiten Bohrung diese zweite Bohrung im Durchdringungsbereich fortsetzt, wird anschließend auch in die zweite Bohrung eine entsprechende rohrförmige, vorzugsweise geschlossene Auskleidung eingebracht, die anschließend im Durchdringungsbereich unter Ausbildung des C-förmigen Querschnittes gemäß dem Durchmesser der von der ersten Auskleidung gebildeten Innenoberfläche der ersten Bohrung aufgetrennt wird. Auch der hierbei anfallende abgetrennte Teilabschnitt der zweiten Auskleidung wird verworfen bzw. einer Wiederverwendung zugeführt.

Im Ergebnis wird damit ein Doppelschneckenzylinder erhalten, der wie im Stand der Technik zwei im Wesentlichen parallel zueinander verlaufende und einander durchdringende Bohrungen aufweist, die mit zwei im Wesentlichen C-förmig ausgebildeten und im Durchdringungsbereich der Bohrungen einander fortsetzenden Auskleidungen als Verschleißschutzschicht versehen ist.

Bei Anwendung des erfindungsgemäßen Verfahrens ergibt sich somit eine Vielzahl von Vorteilen.

Zum einen gestaltet sich das Einbringen der jeweils vereinzelt vorliegenden Auskleidungen in die hierfür vorgesehenen Bohrungen deutlich einfacher als das Einschieben einer vorverbundenen Auskleidung aus zwei miteinander verschweißten Querschnitten.

Zum anderen ist aufgrund der erfindungsgemäß vorgeschlagenen Verfahrensweise ein Verschweißen der in die Bohrungen eingebrachten Auskleidungen nicht erforderlich.

Vielmehr nutzt die Erfindung insbesondere bei der gemäß einem Vorschlag der Erfindung vorgesehenen Herstellung der Auskleidungen aus einem bimetallischen Werkstoff den Effekt aus, dass die zunächst rohrförmigen Auskleidungen nach dem Einbringen in die hierfür vorgesehenen Bohrungen und dem Auftrennten derselben im Durchdringungsbereich aufgrund der innewohnenden Spannungen die Tendenz zeigen, sich aufzuweiten, so dass eine radial nach außen gerichtete Kraft auf die zugeordnete Bohrung ausgeübt wird, die die Auskleidung selbsttätig innerhalb der Bohrung festklemmen lässt und bislang unvermeidliche Luftspalte zwischen der Auskleidung und der Bohrung eliminiert, so dass der Wärmeübergang deutlich verbessert und auch das Messergebnis eines in den Zylinder eingebrachten Temperaturfühlers wesentlich verbessert wird.

Da aufgrund der speziellen Schnittführung beim Auftrennen der ersten und zweiten Auskleidung überdies gewährleistet wird, dass die erste Auskleidung stumpf auf der zweiten Auskleidung zur Anlage kommt, bewirken die vorangehend erläuterten und für die Aufweitungsneigung verantwortlichen Kräfte innerhalb der aufgetrennten Auskleidungen, dass sich die freien Enden der C-förmigen Querschnitte der beiden Auskleidungen im Bereich ihrer Trennfuge aufeinander pressen, so dass ein Verschweißen der beiden Auskleidungen nicht mehr erforderlich ist, was den handwerklichen Aufwand zur Herstellung des Doppelschneckenzylinders beim erfindungsgemäßen Verfahren enorm reduziert.

Zwischen den Bohrungen und den Auskleidungen vor oder nach dem Auftrennen der Auskleidungen eine Verdrehsicherung einzubringen, z.B. in Form mindestens einer in entsprechenden Passfederaufnahmen der Bohrung und der Auskleidung gehalterter Passfedern. Diese verhindern, dass sich die Auskleidung während oder nach dem Auftrennen derselben innerhalb des diese aufnehmenden Rohres unerwünscht verlagert.

Um die gleichmäßige feste Anlage der freien Enden der beiden Auskleidungen aneinander zu verbessern, wird vor dem Einbringen der zweiten Auskleidung die Auftrennfläche, die später stumpf auf die zweite Auskleidung auftrifft und/oder die Innenoberfläche der ersten Auskleidung überzuschleifen, um sie exakt hinsichtlich Maßhaltigkeit und Winkligkeit auszuführen.

Das Auftrennen der Auskleidungen kann im Prinzip mit allen verfügbaren Verfahren durchgeführt werden, wobei erfindungsgemäß ein Auftrennen mittels Drahterodieren als besonders praktikabel angesehen wird.

Das erfindungsgemäße Verfahren ermöglicht es überdies, den Doppelschneckenzylinder aus einer Vielzahl von einander fortsetzenden Segmenten zusammenzufügen, die jeweils lediglich einen Teilabschnitt der Bohrungen umfassen und vor dem Zusammenfügen jeweils abschnittsweise mit den Auskleidungen in der vorangehend beschriebenen Weise versehen werden. Beispielsweise kann vorgesehen sein, Segmente einer Länge von maximal 500 mm herzustellen und jeweils mit Auskleidungen entsprechender Länge in der erfindungsgemäßen Weise zu versehen, so dass diese kompakten Segmente auf einfache Weise im üblichen Bohr-, Schleif- und Erodiermaschinen und dergleichen mehr gehandhabt werden können, bevor aus den solchermaßen hergestellten Einzelelementen der gesamte Doppelschneckenzylinder zusammengefügt wird.

Das Zusammenfügen kann beispielsweise durch lagerichtiges Vorverbinden der Segmente und anschließendes Verschweißen derselben zu dem Doppelschneckenzylinder bewirkt werden.

Weiterhin kann vorgesehen sein, den Doppelschneckenzylinder nach dem Zusammenfügen der Abschnitte im Bereich seiner gesamten Innenoberfläche, d.h. in Gänze zu honen, um eine einheitliche Oberfläche für die Aufnahme der Extruderschnecken zu erreichen.

Aufgrund der aus Segmenten zusammengesetzten Ausbildung des Doppel-schneckenzylinders besteht die Möglichkeit, im Verschleißfalle gezielt die verschleißbehafteten Segmente z.B. durch Auftrennen der Schweißverbindungen oder Auftrennen an jeder anderen beliebigen Position zu entfernen und durch entsprechende neue Segmente zu ersetzen bzw. die verschleißbehaftete Auskleidung aus diesem herausgenommenen Segment zu entfernen und zu ersetzen und das solchermaßen renovierte Segment sodann wieder in den Doppelschneckenzylinder einzusetzen. Der Reparaturaufwand für einen verschlissenen Doppelschneckenzylinder wird damit signifikant reduziert.

Weitere Ausgestaltungen und Einzelheiten der Erfindung werden nachfolgend anhand eines Ausführungsbeispiels in der Zeichnung näher erläutert. Es zeigen:
- Figur 1: die Ansicht auf einen nach dem erfindungsgemäßen Verfahren hergestellten Doppelschneckenzylinder;
- Figuren 2a, 2b: zwei aufeinanderfolgende Arbeitsschritte zur Herstellung des Doppelschneckenzylinders gemäß Figur 1;
- Figur 3: einen Längsschnitt durch ein Segment des Doppelschneckenzylinders gemäß Figur 1;
- Figur 4: einen Längsschnitt durch einen aus Einzelsegmenten zusammengefügten erfindungsgemäßen Doppelschneckenzylinder.

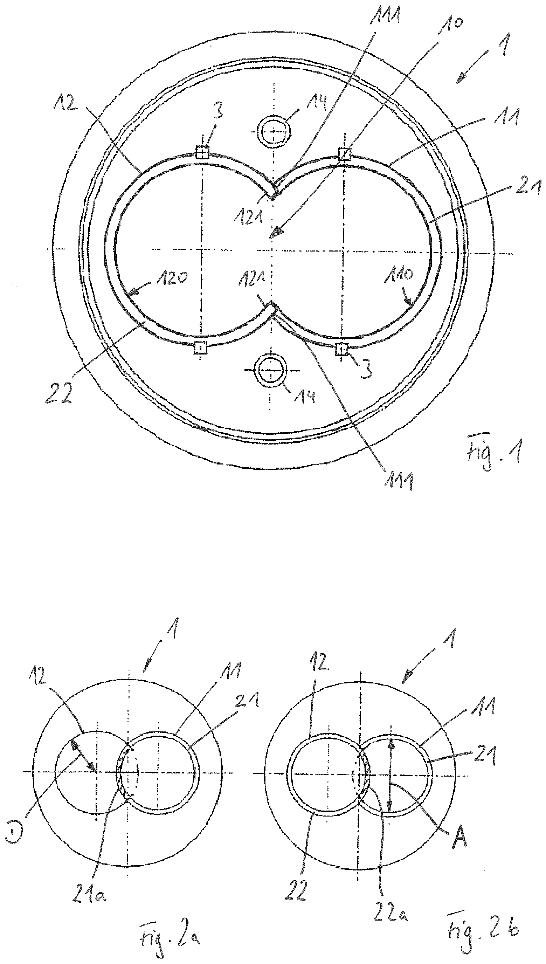

Aus der Figur 1 ist ein global mit Bezugszeichen 1 bezeichneter Doppelschneckenzylinder ersichtlich, der in an sich bekannter Weise als Bauteil eines entsprechenden Doppelschneckenextruders für die Kunststoffverarbeitung - einen aus einem geeigneten metallischen Material gefertigten zylindrischen Grundkörper aufweist, in den zwei im dargestellten Ausführungsbeispiel exakt parallel zueinander verlaufende und gleichen Durchmesser aufweisende Bohrungen 10, 11 derart eingebracht sind, dass sie einander durchdringen und dabei einen Durchdringungsbereich 10 definieren.

Jede der beiden Bohrungen 11, 12 ist mit einer einen im Wesentlichen C-förmigen Querschnitt aufweisenden Auskleidung 21, 22 versehen, welche sich im Durchdringungsbereich 10 einander fortsetzen, so dass die gesamte Innenoberfläche der Bohrungen 11, 12 mit den Auskleidungen 21, 22 bedeckt ist. Die Auskleidungen 21, 22 sind dabei aus einem geeigneten, beispielsweise bimetallischen Material hergestellt und dienen als Verschleißschutzschicht für die innerhalb der Innenoberflächen 110 bzw. 120 aufzunehmenden und hier nicht dargestellten Schnecken des Doppelschneckenextruders.

Aus der Darstellung der Figur 1 erkennt man, dass die beiden Auskleidungen 21, 22 im Gegensatz zum Stand der Technik im Durchdringungsbereich 10, d.h. dem Bereich, in welchem sie einander fortsetzen, nicht miteinander verschweißt sind, sondern die freien Enden 111, 121 sind so zueinander angeordnet, dass die freien Enden 111 der Auskleidung 21 stumpf auf die freien Enden 121 der Auskleidung 12 treffen.

Die Herstellung eines solchen aus der Figur 1 ersichtlichen Doppel-schneckenzylinders wird nachfolgend anhand der Figuren 2a und 2b erläutert.

In einem ersten Schritt werden in an sich bekannter Weise in den Zylinder die beiden Bohrungen 11, 12 parallel zueinander mit dem Durchmesser D eingebracht, der gegenüber dem endgültig zur Aufnahme der Schnecken geforderten Innendurchmesser der Bohrungen 11, 12 ein entsprechend der Dicke der Auskleidungen 21, 22 ausgeführtes Übermaß aufweist.

Sodann wird, wie aus Figur 2a ersichtlich, in die hier beispielhaft als erste Bohrung 11 bezeichnete rechte Bohrung die zugehörige erste Auskleidung 21 eingebracht, wobei diese jedoch zunächst in Form eines geschlossenen Rohres mit dem Außendurchmesser D vorliegt. Das Einbringen erfolgt durch axiales Einschieben der Auskleidung 21 in die Bohrung 11.

Sodann wird die Auskleidung 21 z.B. durch Drahterodieren gemäß dem Durchmesser D der zweiten, linken Bohrung 12, d.h. entlang der gedachten Verlängerung des Durchmesserverlaufs des Durchmessers D im Durchdringungsbereich 10 aufgetrennt, so dass das in Figur 2a schraffiert dargestellte Segment 21a abgetrennt und entfernt wird. Es bleibt eine C-förmige Auskleidung der ersten Bohrung 11 zurück, deren freie Enden 111 im Durchdringungsbereich 10 der beiden Bohrungen 11, 12 enden.

Um zu verhindern, dass sich die Auskleidung 21 beim Auftrennen relativ innerhalb der Bohrung 11 bewegt, werden die aus der Figur 1 ersichtlichen Passfedern 3 zwischen der Bohrung 11 und der Auskleidung 21 eingebracht, bevor die Auskleidung 21 in der bereits beschriebenen Weise aufgetrennt wird.

Da die Auskleidung 21, wie bereits erwähnt, vorzugsweise aus einem bimetallischen Material besteht, besitzt diese nach dem Auftrennen und Entfernen des Segments 21a die Tendenz, sich radial aufzuweiten und übt auf die Oberfläche der Bohrung 11 eine entsprechende radiale Kraft aus, die einen weiteren Selbstklemmeffekt sowie die Eliminierung etwaiger Luftspalte zwischen der Bohrung 11 und der Auskleidung 21 mit sich bringt.

Nachfolgend wird gemäß Figur 2b die zweite, ebenfalls zunächst geschlossene rohrförmige Auskleidung 22 mit Durchmesser D in die noch freie zweite Bohrung 12 eingebracht, z.B. ebenfalls axial eingeschoben und anschließend wird gemäß dem Verlauf des Innendurchmessers A der ersten Auskleidung 21 das in der Figur 2b schraffiert dargestellte Segment 22a der Auskleidung 22 z.B. mittels Drahterodieren abgetrennt, wodurch auch die zweite Auskleidung 22 unter Ausbildung des C-förmigen Querschnittes aufgetrennt wird. Auch hierbei entsteht in der Auskleidung 22 die Tendenz, sich radial aufzuweiten, so dass eine Selbstklemmung auf die Bohrung 12 ausgeübt wird und überdies wird auch die Auskleidung 22 mittels Passstiften 3 an einer Verlagerung innerhalb der Bohrung 12 bereits vor dem Auftrennen derselben gehindert.

Im Ergebnis erhält man somit die aus der Figur 1 ersichtliche Konfiguration, bei welchen die beiden Auskleidungen 21, 22 die Innenoberflächen 110, 120 der Bohrungen 11, 12 bilden und als Verschleißschutzschicht dienen, wobei die freien Enden 111 der ersten Auskleidung 21 stumpf auf die freien Enden 121 der zweiten Auskleidung 22 stoßen, d.h. die freien Enden 111, 121 stehen etwa rechtwinklig zueinander.

Infolge der bereits erwähnten Tendenz zur radialen Aufweitung erfährt hierbei die Stoßfläche zwischen den freien Enden 111, 121 eine entsprechende Flächenpressung, so dass kein unerwünschtes Materials, z.B. Schmelze aus den in den Bohrungen aufgenommenen Schnecken eindringen kann und insoweit die beiden Auskleidungen 21, 22 im Durchdringungsbereich 10 nicht miteinander verschweißt werden müssen.

Es versteht sich, dass zur weiteren Verbesserung des Anpressdruckes zwischen den freien Enden 111, 121 vorgesehen sein kann, nach dem Auftrennen der ersten Auskleidung 21 und Entfernen des Segmentes 21a die Schnittflächen und/oder die Innenoberfläche 110 der Auskleidung 21 nochmals zu schleifen, um deren Maßhaltigkeit und Winkligkeit sicherzustellen.

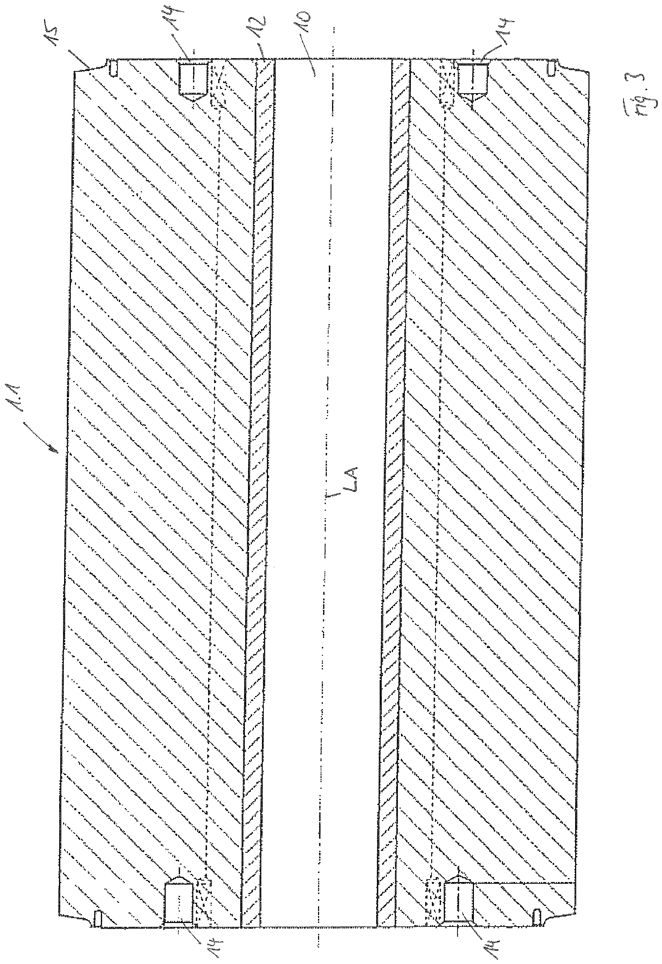

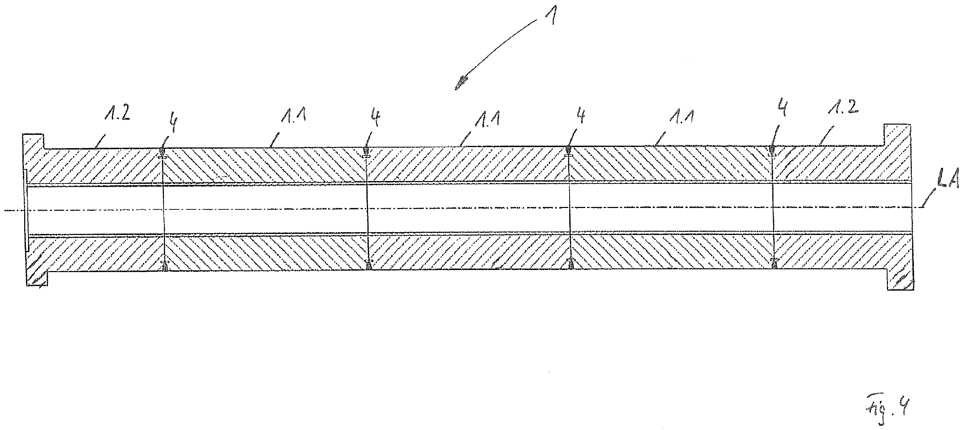

Wie insbesondere aus der Darstellung gemäß Figuren 3 und 4 ersichtlich, ermöglicht die erfindungsgemäße und vorangehend erläuterte Verfahrensweise zur Einbringung der als Verschleißschutzschicht dienenden Auskleidungen 21, 22 in die Bohrungen 11, 12 die Möglichkeit, den Doppelschneckenzylinder 1 aus einer Vielzahl von Segmenten herzustellen, die aus der Figur 4 ersichtlich ist. Demzufolge umfasst der hier dargestellte gesamte Doppelschneckenzylinder 1 mehrere, hier beispielhaft drei zylindrische Segmente 1.1, von denen eines in vergrößerter Darstellung auch aus der Figur 3 ersichtlich ist, sowie jeweils endseitig vorgesehene und mit einem angeformten Flansch versehene weitere Segmente 1.2, deren Aufbau aber im Übrigen vergleichbar zu dem Segment 1.1 gemäß Figur 3 ist.

Beispielhaft kann jedes dieser Segmente eine Länge von maximal 500 mm aufweisen, so dass sämtliche vorangehend genannten Arbeitsschritte, wie Bohren, Erodieren, Schleifen mittels handelsüblicher Werkzeugmaschinen und mit geringem Aufwand an Transport und Hebezeugen durchgeführt werden kann, wobei jedes einzelne Segment 1.1, 1.2 einen Teilabschnitt der Bohrungen 11, 12 umfasst, die in der vorangehend erläuterten Weise jeweils mit entsprechenden Auskleidungen 11, 12 der abschnittsgemäßen Länge ausgerüstet werden und im Querschnitt die Konfiguration gemäß Figur 1 aufweisen.

Sodann werden die einzelnen Segmente wie aus Figur 4 ersichtlich mittels Schweißnähten 4 so miteinander verbunden, dass die einzelnen Längsachsen LA der Segmente sich zu einer gemeinsamen Längsachse LA des Doppel-schneckenzylinders 1 ergänzen und miteinander fluchten.

Das Ausrichten und Vorverbinden der Segmente 1.1, 1.2 miteinander wird durch stirnseitig eingebrachte Aufnahmebohrungen 14 für Zentrierstifte und dergleichen erleichtert, ferner können stirnseitig bereits Anfasungen 15 für die Einbringung der Schweißnähte 4 vorgesehen werden. Selbstverständlich kann nach dem Zusammenfügen aller Segmente zu dem Doppelschneckenzylinder 1 gemäß Figur 4 ein gemeinsames Honen der Innenoberflächen 110, 120 vorgesehen sein, um eine gleichmäßige Oberfläche zu gewährleisten.

Neben der bereits erwähnten vereinfachten Handhabung der Einzelsegmente und der Einbringung der Bohrungen 11, 12 und Auskleidungen 21, 22 bietet die erfindungsgemäße Anordnung darüber hinaus den Vorteil, dass einzelne verschleißbehaftete Segmente gezielt ausgetauscht werden können, indem die entsprechenden Schweißverbindungen 4 aufgetrennt werden. Insbesondere ist es aufgrund der ohne Verschweißungen auskommenden Anlage der Auskleidungen 21, 22 aneinander möglich, auch nur einzelne Auskleidungen 21, 22 z.B. im Verschleißfalle auszutauschen. Der Aufwand für die Überholung eines derartigen Doppelschneckenzylinders 1 wird somit enorm reduziert.

Es versteht sich, dass die Anzahl der Segmente 1.1, 1.2 je nach Länge des Doppelschneckenzylinders 1 variieren kann.

## Patentansprüche

1. Verfahren zur Herstellung eines mit einer Verschleißschutzschicht versehenen Doppelschneckenzylinders (1), bei welchem zwei im Wesentlichen parallel zueinander verlaufende und einander durchdringende Bohrungen (11, 12) in einen Zylinder eingebracht werden und anschließend in die Bohrungen (11, 12) zwei mit im wesentlichen C-förmig ausgebildetem Querschnitt versehene und im Durchdringungsbereich (10) der Bohrungen (11, 12) einander fortsetzende Auskleidungen (21, 22) eingebracht werden, die die Innenoberfläche (110, 120) der Bohrungen (11, 12) bilden und als Verschleißschutzschicht dienen, **dadurch gekennzeichnet, dass** der Doppelschneckenzylinder (1) aus einer Vielzahl von einander fortsetzenden Segmenten (1.1, 1.2) zusammengefügt wird, die jeweils einen Teilabschnitt der Bohrungen (11, 12) umfassen und vor dem Zusammenfügen abschnittsweise mit den Auskleidungen (21, 22) versehen werden, wobei zunächst eine erste rohrförmige Auskleidung (21) in eine erste der Bohrungen (11) eingebracht wird und dann unter Ausbildung des C-förmigen Querschnittes gemäß dem Durchmesser (D) der anderen Bohrung (12) aufgetrennt wird und anschließend eine zweite rohrförmige Auskleidung (22) in die zweite der Bohrungen (12) eingebracht wird und dann unter Ausbildung des C-förmigen Querschnittes gemäß dem Durchmesser (A) der von der ersten Auskleidung (21) gebildeten Innenoberfläche (110) der ersten Bohrung (11) aufgetrennt wird, wobei die freien Enden (111) der ersten Auskleidung (21) mit dem C-förmigen Querschnitt auf der gedachten Umfangslinie des Durchmessers (D) der benachbarten Bohrung (12) enden und die freien Enden (121) der zweiten Auskleidung (22) mit dem C-förmigen Querschnitt auf der gedachten Umfangslinie des Innendurchmessers (A) der ersten Auskleidung (21) enden und zwischen den Bohrungen (11, 12) und den Auskleidungen (21, 22) vor oder nach dem Auftrennen der Auskleidungen (21, 22) eine Verdrehsicherung eingebracht wird.

2. Verfahren nach Anspruch 1, **dadurch gekennzeichnet, dass** als Verdrehsicherung jeweils mindestens eine Passfeder(3) in entsprechende Passfederaufnahmen der Bohrung (11, 12) und der Auskleidung (21, 22) eingebracht wird.

3. Verfahren nach einem der Ansprüche 1 oder 2, **dadurch gekennzeichnet, dass** vor dem Einbringen der zweiten Auskleidung (22) die Auftrennfläche und/oder die Innenoberfläche der ersten Auskleidung (21) geschliffen werden.

4. Verfahren nach einem der Ansprüche 1 bis 3, **dadurch gekennzeichnet, dass** die Auskleidungen (21, 22) aus einem bimetallischen Werkstoff hergestellt sind und nach dem Auftrennen eine radial nach außen gerichtete Kraft auf die zugeordnete Bohrung (11, 12) ausüben.

5. Verfahren nach einem der Ansprüche 1 bis 4, **dadurch gekennzeichnet, dass** das Auftrennen der Auskleidungen (21, 22) mittels Drahterodieren bewirkt wird.

6. Verfahren nach Anspruch 1, **dadurch gekennzeichnet, dass** die Segmente (1.1, 1.2) lagerichtig zueinander vorverbunden und anschließend zu dem Doppelschneckenzylinder verschweißt werden.

7. Verfahren nach Anspruch 1, **dadurch gekennzeichnet, dass** der Doppelschneckenzylinder (1) nach dem Zusammenfügen der Segmente (1.1, 1.2) im Bereich seiner gesamten Innenoberfläche gehont wird.

8. Doppelschneckenzylinder (1) mit zwei im Wesentlichen parallel zueinander verlaufenden und einander durchdringenden Bohrungen (11, 12), die im Bereich Ihrer Innenoberfläche mit einer Verschleißschutzschicht aus zwei in die Bohrungen (11, 12) eingebrachten und einen im wesentlichen C-förmigen Querschnitt aufweisenden und einander im Durchdringungsbereich (10) der Bohrungen (11, 12) fortsetzenden Auskleidungen (21, 22) versehen ist, **dadurch gekennzeichnet, dass** er aus einer Vielzahl von einander fortsetzenden Segmenten (1.1, 1.2) gebildet ist, die jeweils einen Abschnitt der mit der Verschleißschutzschicht versehenen Bohrungen (11, 12) umfassen, wobeieine erste der Auskleidungen (21) stumpf auf der zweiten Auskleidung (22) zur Anlage kommt und die erste Auskleidung (21) einen C-förmigen Querschnitt aufweist, dessen freie Enden (111) auf der gedachten Umfangslinie des Durchmessers (D) der benachbarten Bohrung (12) enden und die zweite Auskleidung (22) einen C-förmigen Querschnitt aufweist, dessen freie Enden (121) auf der gedachten Umfangslinie des Innendurchmessers (A) der ersten Auskleidung (21) enden und zwischen den Bohrungen (11, 12) und den darin eingebrachten Auskleidungen (21, 22) jeweils mindestens eine Verdrehsicherung angeordnet ist.

9. Doppelschneckenzylinder (1) nach Anspruch 8, **dadurch gekennzeichnet, dass** die Verdrehsicherung von einer Passfeder (3) gebildet ist.

## Claims

1. Method for producing a twin screw cylinder (1) provided with a wear-resistant coating, in which two bores (11, 12), extending essentially parallel to each other and penetrating one another, are introduced into a cylinder and then two liners (21, 22) are inserted into the bores (11, 12), the liners having an essentially C-shaped cross-section, continuing from each other in the penetration area (10) of the bores (11, 12), forming an inner surface (110, 120) of the bores (11, 12) and being used as a wear-resistant coating, **characterised in that** the twin screw cylinder (1) is assembled from a plurality of segments (1.1, 1.2) that continue from one another, which each comprises a subsection of the bores (11, 12) and before the assembly are provided in sections with the liners (21, 22), wherein firstly a first tubular liner (21) is inserted into a first bore (11) and is then separated to form the C-shaped cross-section according to the diameter (D) of the other bore (12), and then a second tubular liner (22) is inserted into the second bore (12) and then separated to form the C-shaped cross-section in accordance with the diameter (A) of the inner surface (110) of the first bore (11) formed by the first liner (21), wherein the free ends (111) of the first liner (21) with the C-shaped cross-section come to an end on the imaginary circumference line of the diameter (D) of the adjacent bore (12) and the free ends (121) of the second liner (22) with the C-shaped cross-section come to an end on the imaginary circumference line of the inner diameter (A) of the first liner (21) and a rotation prevention is inserted between the bores (11, 12) and the liners (21, 22) before or after the separation of the liners (21, 22).

2. Method according to claim 1, **characterised in that** the rotation prevention in the form of at least one feather key (3) is inserted into corresponding feather key recesses in the bore (11, 12) and the liner (21, 22).

3. Method according to any of claims 1 or 2, **characterised in that** before the insertion of the second liner (22), the separating surface and/or the inner surface of the first liner (21) is/are ground.

4. Method according to any of claims 1 to 3, **characterised in that** the liners (21, 22) are composed of a bimetallic material and after the separation exert a radially outwardly directed force on the associated bore (11, 12).

5. Method according to any of claims 1 to 4, **characterised in that** the separating of the liners (21, 22) is carried out by wire erosion.

6. Method according to claim 1, **characterised in that** the segments (1.1, 1.2) are pre-attached to one another in the correct position and then are welded to produce the twin screw cylinder.

7. Method according to claim 1, **characterised in that** after the assembly of the segments (1.1, 1.2) the twin screw cylinder (1) is honed in a region of its inner surface.

8. Twin screw cylinder (1) having two bores (11, 12) extending essentially parallel to one other and penetrating one other, which in the region of their inner surface have a wear-resistant coating consisting of two liners (21, 22) that are inserted into the bores (11, 12), the liners having an essentially C-shaped cross-section and continuing from each other in the penetration area (10) of the bores (11, 12), **characterised in that** it is formed by a plurality of segments (1.1, 1.2) continuing from one another which comprise respectively a section of the bores (11, 12) provided with the wear-resistant coating, wherein a first of the liners (21) abuts against the second liner (21) and the first liner (21) has a C-shaped cross-section, the free ends (111) of which come to an end on the imaginary circumference line of the diameter (D) of the adjacent bore (12) and the second liner (22) has a C-shaped cross-section, the free ends (121) of which come to an end on the imaginary circumference line of the inner diameter (A) of the first liner (21) and at least one rotation prevention is provided respectively between the bores (11, 12) and the liners (21, 22) inserted therein.

9. Twin screw cylinder (1) according to claim 8, **characterised in that** the rotation prevention is formed by a feather key (3).

## Revendications

1. Procédé de fabrication d'un cylindre à deux vis (1) muni d'une couche de protection d'usure, dans lequel deux trous (11, 12) s'étendant sensiblement parallèlement l'un à l'autre et pénétrant l'un dans l'autre sont réalisés dans un cylindre puis deux revêtements (21, 22) munis d'une section transversale réalisée sensiblement en forme de C et se continuant mutuellement dans la zone de pénétration (10) des trous (11, 12) sont placés dans les trous (11, 12), lesquels revêtements forment la surface interne (110, 120) des trous (11, 12) et servent de couches de protection d'usure, **caractérisé en ce que** le cylindre à deux vis (1) est composé d'une multitude de segments (1.1, 1.2) se continuant mutuellement, qui comprennent chacun un tronçon partiel des trous (11, 12) et qui sont munis des revêtements (21, 22) par tronçons avant l'assemblage, dans lequel un premier revêtement tubulaire (21) est d'abord placé dans un premier trou (11) puis est séparé en formant la section transversale en forme de C selon le diamètre (D) de l'autre trou (12) et ensuite un deuxième revêtement tubulaire (22) est placé dans le deuxième trou (12) puis est séparé en formant la section transversale en forme de C selon le diamètre (A) de la surface interne (110), formée par le premier revêtement (21), du premier trou (11), dans lequel les extrémités libres (111) du premier revêtement (21) avec la section transversale en forme de C se terminent sur la ligne périphérique imaginaire du diamètre (D) du trou voisin (12) et les extrémités libres (121) du deuxième revêtement (22) avec la section transversale en forme de C se terminent sur la ligne périphérique imaginaire du diamètre interne (A) du premier revêtement (21) et une sécurité anti-torsion est placée entre les trous (11, 12) et les revêtements (21, 22) avant ou après la séparation des revêtements (21, 22).

2. Procédé selon la revendication 1, **caractérisé en ce que**, en tant que sécurité anti-torsion, à chaque fois au moins une clavette parallèle (3) est placée dans des logements de clavette correspondants du trou (11, 12) et du revêtement (21, 22).

3. Procédé selon l'une quelconque des revendications 1 ou 2, **caractérisé en ce que**, avant la mise en place du deuxième revêtement (22), la surface de séparation et/ou la surface interne du premier revêtement (21) sont polies.

4. Procédé selon l'une quelconque des revendications 1 à 3, **caractérisé en ce que** les revêtements (21, 22) sont fabriqués en un matériau bimétallique et, après la séparation, ils exercent sur le trou (11, 12) associé une force dirigée radialement vers l'extérieur.

5. Procédé selon l'une quelconque des revendications 1 à 4, **caractérisé en ce que** la séparation des revêtements (21, 22) est provoquée au moyen d'un étincelage par fil.

6. Procédé selon la revendication 1, **caractérisé en ce que** les segments (1.1, 1.2) sont reliés au préalable l'un à l'autre dans une position correcte puis sont soudés pour former le cylindre à deux vis.

7. Procédé selon la revendication 1, **caractérisé en ce que**, après l'assemblage des segments (1.1, 1.2), le cylindre à deux vis (1) est pierré dans la zone de toute sa surface interne.

8. Cylindre à deux vis (1) avec deux trous (11, 12) s'étendant sensiblement parallèlement l'un à l'autre et pénétrant l'un dans l'autre, qui est muni dans la zone de sa surface interne d'une couche de protection d'usure composée de deux revêtements (21, 22) placés dans les trous (11, 12) et présentant une section transversale sensiblement en forme de C et se continuant mutuellement dans la zone de pénétration (10) des trous (11, 12), **caractérisé en ce qu'**il est formé d'une multitude de segments (1.1, 1.2) se continuant mutuellement qui comprennent chacun un tronçon des trous (11, 12) munis de la couche de protection d'usure, dans lequel un premier revêtement (21) vient s'appuyer bout à bout contre le deuxième revêtement (22) et le premier revêtement (21) présente une section transversale en forme de C dont les extrémités libres (111) se terminent sur la ligne périphérique imaginaire du diamètre (D) du trou voisin (12) et le deuxième revêtement (22) présente une section transversale en forme de C dont les extrémités libres (121) se terminent sur la ligne périphérique imaginaire du diamètre intérieur (A) du premier revêtement (21) et à chaque fois au moins une sécurité anti-torsion est agencée entre les trous (11, 12) et les revêtements (21, 22) placés à l'intérieur.

9. Cylindre à deux vis (1) selon la revendication 8, **caractérisé en ce que** la sécurité anti-torsion est formée par une clavette parallèle (3).
